# EUROPEAN PATENT SPECIFICATION

(11) **EP 4 034 841 B1**
(45) Date of publication and mention of the grant of the patent: **30.10.2024**
(21) Application number: 20800987.8
(22) Date of filing: 21.09.2020
(51) Int. Cl.: G02B 27/00, G01C 21/36, G06F 3/01, G02B 27/01, G01C 21/00

(54) **METHOD AND SYSTEM OF VEHICLE DRIVING ASSISTANCE**
VERFAHREN UND SYSTEM ZUR FAHRZEUGFAHRUNTERSTÜTZUNG
PROCÉDÉ ET SYSTÈME D'ASSISTANCE À LA CONDUITE DE VÉHICULE

(30) Priority: 27.09.2019 IT 201900017429
(43) Date of publication of application: 03.08.2022
(73) Proprietor: Politecnico di Milano, 20133 Milano (IT)
(72) Inventor: SAVARESI, Sergio Matteo, 20133 Milano (IT); CORNO, Matteo, 20133 Milano (IT); FRANCESCHETTI, Luca, 20133 Milano (IT); RONCHI, Marta, 20133 Milano (IT)
(74) Representative: Di Bernardo, Antonio
(86) International application number: PCT/IB2020/058765
(87) International publication number: WO 2021/059107

(56) References cited:
- US-A1- 2002 105 484
- US-A1- 2002 105 484
- US-A1- 2015 097 864
- US-A1- 2015 097 864
- US-A1- 2015 317 834
- US-A1- 2015 317 834
- US-A1- 2017 132 806
- US-A1- 2017 132 806
- GUY BERG: "Das Vehicle in the Loop - Ein Werkzeug für die Entwicklung und Evaluation von sicherheitskritischen Fahrerassistenzsystemen", 10 April 2014 (2014-04-10), XP055694645, Retrieved from the Internet <URL:http://athene-forschung.unibw.de/download/97267/97267.pdf> [retrieved on 20200513]
- GUY BERG: "Das Vehicle in the Loop - Ein Werkzeug für die Entwicklung und Evaluation von sicherheitskritischen Fahrerassistenzsystemen", 10 April 2014 (2014-04-10), XP055694645, Retrieved from the Internet <URL:http://athene-forschung.unibw.de/download/97267/97267.pdf> [retrieved on 20200513]

## Description

### TECHNICAL FIELD

The present invention relates to the field of transport vehicles. In particular, the invention relates to a method and a system for assisting the driving of a vehicle.

### BACKGROUND

To date, driving information such as information on movement speed, fuel level, navigation directions or the like, is shown in the dashboard of a vehicle or on any infotainment screens with which the vehicle is equipped. Both the dashboard and the screens are often located in the vehicle in positions which require the driver to at least partially take his eyes off the road environment, thus reducing both driving safety and the possibility of using such information.

In the automotive and aviation sectors, 'Head Up Displays', or HUD for short, have been proposed as a partial solution to this problem. An HUD is a system which allows to project images onto the windscreen of a vehicle. In particular, HUDs allow information to be projected directly onto the car's windscreen, allowing the driver to stay focused on driving, always keeping his gaze on the road.

However, the current standard of HUDs, known as HUD 1.0, is only used to show redundant information provided by classic on-board instrumentation. Furthermore, the Applicant has observed that the HUD technology does not allow to effectively depict elements of augmented reality. In fact, the extension required by the projection system for a complete coverage of the driver's field of vision is much greater than that technologically available at the current state of the art. In particular, there are no HUDs capable of exploiting the entire main field of vision substantially defined by the vehicle's windscreen, as well as a secondary field of vision, such as one or more side windows.

Alongside the HUD systems, more recently systems based on wearable screens have been proposed, better known as 'Head Mounted Displays', or HMD for short, which comprise a transparent or semi-transparent screen on which images can be reproduced, for example to provide driving assistance information to a user wearing the HMD while driving the vehicle.

For example, U.S. patent application no. US 2016/084661 describes a system and method which act as a driving tool and provide feedback to a driver, such as real-time visual feedback offered via an augmented reality device. The guidance system collects vehicle-related information and driver information - for example, the direction of the driver's gaze determined by an HMD - and uses this input information to generate real-time visual feedback in the form of virtual guidelines and other driving recommendations. These driving recommendations can be presented to the driver via an augmented reality device, such as an HUD display, where virtual guidance lines are projected onto the vehicle's windscreen so as to be superimposed on the actual road surface seen by the driver and can show the driver a line or route to follow. Furthermore, other driving recommendations can be given, such as braking, accelerating, steering and shifting suggestions.

The Applicant has observed that the methods proposed in US 2016/084661 for determining the field of view observed by the driver and therefore effectively displaying real images are complex to implement. In particular, analysing the driver's gaze as described in US 2016/084661 requires a complex implementation from a hardware and software perspective, in order to identify with sufficient precision the field of view observed by the driver and determine the size and position of one or more augmented reality images on the HMD o HUD.

Again, European patent no. EP 2933707 describes a method for dynamically orienting what is presented by an HMD. The described method includes using at least one sensor installed on an HMD worn by the driver of a vehicle, to collect HMD movement data, and to use at least one sensor, mounted on the vehicle, to collect the vehicle movement data. The method therefore involves performing an analysis of the movement data of the HMD and the vehicle movement data to detect any differences therebetween. Based on the differences found, an orientation of the HMD device relative to the vehicle is calculated, calculated as regular data to be presented on a screen of the HMD device based on the newly calculated orientation.

Although the method proposed in EP 2933707 is able to determine the orientation of the HMD, it does not allow satisfactory accuracy and precision to be obtained. Furthermore, the method requires high computational resources to calculate and generate data from consistently presented HMD data based on the comparison of images of a scenario visible to the driver through a vehicle windscreen.

### OBJECTS AND SUMMARY OF THE INVENTION

An object of the present invention is to overcome the disadvantages of the prior art.

In particular, an object of the present invention is to present a method and system for feedback offered via an augmented reality device. The guidance system collects vehicle-related information and driver information - for example, the direction of the driver's gaze determined by an HMD - and uses this input information to generate real-time visual feedback in the form of virtual guidelines and other driving recommendations. These driving recommendations can be presented to the driver via an augmented reality device, such as an HUD display, where virtual guidance lines are projected onto the vehicle's windscreen so as to be superimposed on the actual road surface seen by the driver and can show the driver a line or route to follow. Furthermore, other driving recommendations can be given, such as braking, accelerating, steering and shifting suggestions.

The Applicant has observed that the methods proposed in US 2016/084661 for determining the field of view observed by the driver and therefore effectively displaying real images are complex to implement. In particular, analysing the driver's gaze as described in US 2016/084661 requires a complex implementation from a hardware and software perspective, in order to identify with sufficient precision the field of view observed by the driver and determine the size and position of one or more augmented reality images on the HMD o HUD.

Again, European patent no. EP 2933707 describes a method for dynamically orienting what is presented by an HMD. The described method includes using at least one sensor installed on an HMD worn by the driver of a vehicle, to collect HMD movement data, and to use at least one sensor, mounted on the vehicle, to collect the vehicle movement data. The method therefore involves performing an analysis of the movement data of the HMD and the vehicle movement data to detect any differences therebetween. Based on the differences found, an orientation of the HMD device relative to the vehicle is calculated, calculated as regular data to be presented on a screen of the HMD device based on the newly calculated orientation.

Although the method proposed in EP 2933707 is able to determine the orientation of the HMD, it does not allow satisfactory accuracy and precision to be obtained. Furthermore, the method requires high computational resources to calculate and generate data from consistently presented HMD data based on the comparison of images of a scenario visible to the driver through a vehicle windscreen.

Finally, Guy Berg: "Das Vehicle in the Loop - Ein Werkzeug für die Entwicklung und Evaluation von sicherheitskritischen Fahrerassistenzsystemen", Universität der Bundeswehr München, April 10th, 2014, discloses a system for assisting the driving of a vehicle that comprises a HMD. The system further comprises a device that tracks the movements of the head of the driver and reference markers, which are used to determine the position of the HMD within the vehicle and the field of view of the driver wearing the HMD.

### OBJECTS AND SUMMARY OF THE INVENTION

An object of the present invention is to overcome the disadvantages of the prior art.

In particular, an object of the present invention is to present a method and system for assisting driving capable of providing precise and reliable indications which assist a user while driving a vehicle.

An object of the present invention is to present a method and a system for reproducing elements of augmented reality adapted to improve the driving experience of a user while using the vehicle.

These and other objects of the present invention are achieved by the method and the system incorporating the features of the accompanying claims, which form an integral part of the present description.

The invention is set out by the method according to claim 1.

Advantageously, the visualization position is such that a user wearing the screen sees the image in correspondence of the object of interest.

Thanks to this solution it is possible to display augmented reality images with precision in the visual field of a user wearing the HMD solely on the basis of positioning data. In particular, it is possible to effectively compensate for display errors due to a different position of the positioning module and of the HMD; in fact, even a small distance between these two elements can cause significant inaccuracies in the display of the augmented reality images, with a consequent reduction in the usefulness of the information associated with the images of augmented reality, or even a worsening of the user's driving conditions.

Advantageously, the method according to the present invention needs to acquire and process only positioning information such as that provided by a global navigation system or GNSS (for example, GPS, Galileo, GLONASS, Beidou, etc.), but does not require processing acquired images to recognize objects visible through the vehicle windscreen in order to correctly display the augmented reality images. This allows to operate in real time with a high accuracy and precision in the display of augmented reality images with substantially lower computational cost and hardware requirements.

The invention is set out as in the system according to claim 9.

Preferably, the HMD comprises at least two cameras arranged on opposite sides of a screen of the HMD. In this case, the step of determining a relative position of the HMD with respect to the reference element involves:
- using each camera of the HMD, for acquiring an image of the reference element located inside the vehicle;
- calculating a relative position of each camera with respect to the reference element by processing the respective acquired image;
- calculating the relative position of the HMD with respect to the reference element by combining the relative positions of the cameras.

These solutions allow to determine the position of the HMD in a simple but simultaneously precise and accurate manner. Furthermore, the use of reference elements removes the need for components (video cameras, photo cameras, infrared sensors, pressure sensors, etc.) outside the HMD and configured to identify user movements in order to assess the position of the HMD worn by the user.

In one embodiment, the system comprises a plurality of reference elements of which one selected reference element acts as the main reference element and the other reference elements act as secondary reference elements. Preferably, the method further comprises the step where for each secondary reference element, calculating a reference relationship corresponding to a rototranslation relationship between the secondary reference element with respect to the main reference element. Even more preferably, the step of determining a relative position of the HMD with respect to the reference element includes:
- calculating the relative position of the HMD with respect to at least two reference elements;
- applying the rototranslation relationship to the relative position of the HMD calculated with respect to each secondary reference element, and
- calculating a combined relative position of the HMD relative to the main reference element by combining the relative positions calculated with respect to the at least two reference elements.

Thanks to this solution, both the relative and global position of the HMD is determined in a precise and robust manner.

In addition, it is possible to configure the system so that it is sufficient to identify any reference element to quickly and reliably determine the position and orientation of the HMD with respect to the main reference element.

This guarantees the system greater versatility - without substantially increasing the complexity thereof - regardless of the vehicle shape and, at the same time, allows the correct display of augmented reality images when the HMD is directed to various regions of the vehicle provided with a reference element (for example, at the windscreen and one or more of the side windows or the rear window of a motor vehicle).

In one embodiment, the step of determining a view volume involves:
- calculating an orientation of the HMD with respect to the reference element by processing the at least one acquired image, and
- determining the field of view of the HMD based on the global position of the HMD and the orientation of the HMD with respect to the reference element.

Thanks to this solution it is possible to precisely identify the field of view of the user wearing the HMD even in case of head movements - such as rotations, inclinations - which do not change the position of the HMD. As a result, the view volume is also identified more accurately.

In one embodiment, the position and orientation of the HMD relative to the reference element are determined contextually, i.e., the pose of the HMD relative to the reference element is determined. Therefore, analysis steps of two images acquired by two cameras and/or the use of several reference elements as described above in relation to the position of the HMD can also be envisaged, also to determine the orientation of the HMD, obtaining the same benefits.

Advantageously, the solutions described above allow to determine the pose of the HMD with precision even while the vehicle is in motion. In particular, the pose of the HMD is determined in a more reliable manner and does not require the implementation of complex hardware and/or software components, as opposed to known solutions which involve the use of IMUs and other sensors to calculate the position and orientation of the HMD, moreover, with limited accuracy when the vehicle is in motion.

In one embodiment, the method further comprises the steps of:
- selecting a boresighting position;
- displaying a boresighting image in a visualization position on the HMD, said visualization position being calculated according to the boresighting position and to the vehicle position;
- measuring a position discrepancy between the boresighting position and the visualization position, and
- determining said compensation law on the basis of said discrepancy.

In this way the compensation law can be determined precisely and immediately regardless of the specific features of the vehicle and/or implementation choices selected during the installation of the system.

Preferably, this measurement of the discrepancy comprises defining a rototranslation relationship between a virtual boresighting position and the boresighting position, said virtual boresighting position corresponding to the projection of the visualization position in a three-dimensional reference system. Even more preferably, the compensation law is determined on the basis of said rototranslation relationship.

Thanks to this solution it is possible to define the compensation law through operations which can also be implemented by systems with limited hardware resources and/or with a particularly low computational cost.

According to an embodiment, the method provides that a boresighting object is situated in the boresighting position. In this case, defining a rototranslation relationship preferably involves:
- orientating the HMD so as to comprise the boresighting object in the field of view of the HMD;
- translating the boresighting image displayed on the HMD until obtaining an overlap of the boresighting image with the boresighting object in the boresighting position, and
- converting said translation of the boresighting image in a two-dimensional reference system in a translation and a rotation of the virtual boresighting position in the three-dimensional reference system.

These calibration steps allow to determine the compensation law in an extremely simple manner. In particular, these system calibration steps can be performed by a user without particular skills and/or training. Furthermore, this solution allows for new calibrations to be carried out quickly and easily if necessary - for example, by moving the system from one vehicle to another, if the position of one or more reference elements were changed and/or periodically to cancel deviations which may arise during use.

In one embodiment, the method further comprises the step of:
- acquiring vehicle movement information and,
in which the step of displaying on the HMD an image associated with the object of interest involves:
- modifying the image as a function of the movement of the vehicle and of time. Thanks to this solution it is possible to further increase the precision and accuracy in the display of augmented reality images, especially when the vehicle is in motion.

A different aspect concerns a system for assisting the driving of a vehicle.

According to the invention, such a system comprises:
- an HMD;
- at least one reference element arranged inside the vehicle;
- a positioning module mounted on the vehicle configured to detect a vehicle position;

- a memory area in which at least one position of interest associated with an object of interest is stored, and
- a processing unit connected to the positioning module, to the HMD, and configured to implement the method according to any one of the embodiments described above.

This system is particularly compact and allows information to be provided to the user driving the vehicle in a precise and reliable way using limited hardware resources.

In one embodiment, the at least one reference element is backlit so as to be more simply identifiable.

In one embodiment, the system comprises a plurality of reference elements each comprising a respective identification code, so as to allow to distinguish the reference elements from each other.

In one embodiment, the positioning module comprises a GNSS module. Additionally or alternatively, the positioning module may comprise a triangulation module of electromagnetic signals, a radar, a lidar and/or similar devices.

In one embodiment, the processing unit stores or is connectable to a positioning data database, to acquire at least one position of interest associated with a corresponding object of interest.

In one embodiment, the processing unit is operatively connected to at least one of:
- a BUS for vehicle communication, and
- an inertial measurement unit,
for acquiring vehicle information.

Thanks to this solution, the system is able to acquire and display a considerable amount of useful information to assist the driving of the vehicle.

Further features and advantages of the present invention will be more apparent from the description of the accompanying drawings.

### BRIEF DESCRIPTION OF THE DRAWINGS

The invention will be described below with reference to some examples, provided for explanatory and non-limiting purposes, and illustrated in the accompanying drawings. These drawings illustrate different aspects and embodiments of the present invention and, where appropriate, reference numerals illustrating similar structures, components, materials and/or elements in different figures are indicated by similar reference numbers.
Figure 1 is a schematic view of the system according to an embodiment of the present invention installed on a vehicle;
Figure 2 is a schematic top view of a travelling vehicle in which the system according to an embodiment of the present invention is installed;
Figure 3 is a flow chart of the method according to an embodiment of the present invention;
Figures 4a and 4b are schematic views illustrating a variation of a pose of an HMD comprised in the system of Figures 1 and 2;
Figures 5a - 5c schematically illustrate a field of view visible through the HMD;
Figure 6 is a schematic isometric view illustrating an identification and determination step of orientation and position of a marker of the system of Figure 1;
Figure 7 is an axonometric view which schematically illustrates three markers of the system of Figure 1 having different orientations and positions;
Figures 8a and 8b are schematic views illustrating salient steps of a system boresighting procedure according to an embodiment of the present invention, and
Figure 9 is a schematic view illustrating the display of images associated with corresponding objects of interest on the HMD of the system.

### DETAILED DESCRIPTION OF THE INVENTION

While the invention is susceptible to various modifications and alternative constructions, certain preferred embodiments are shown in the drawings and are described hereinbelow in detail. It is in any case to be noted that there is no intention to limit the invention to the specific embodiment illustrated, rather on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "includes" means "includes, but not limited to" unless otherwise stated.

With reference to the figures, a system 1 according to the embodiments of the present invention comprises a wearable screen, more commonly indicated as Head Mount Display, or HMD 10, a positioning module, for example a GNSS module 20 (Global Navigation Satellite System), a processing unit 30 configured to connect to the GNSS module 20 and to the HMD 10, and one or more markers 40 of the ArUco type in the example considered.

The GNSS module 20 is configured to provide periodically and/or upon request an indication on a detected position, preferably, defined in a three-dimensional reference system originating in the centre of the Earth - referred to below with the term 'global reference system'. For example, the GNSS module 20 comprises a GPS navigator and is configured to provide a set of geographical coordinates indicative of a global position detected by the GNSS module 20 and therefore of the vehicle 5.

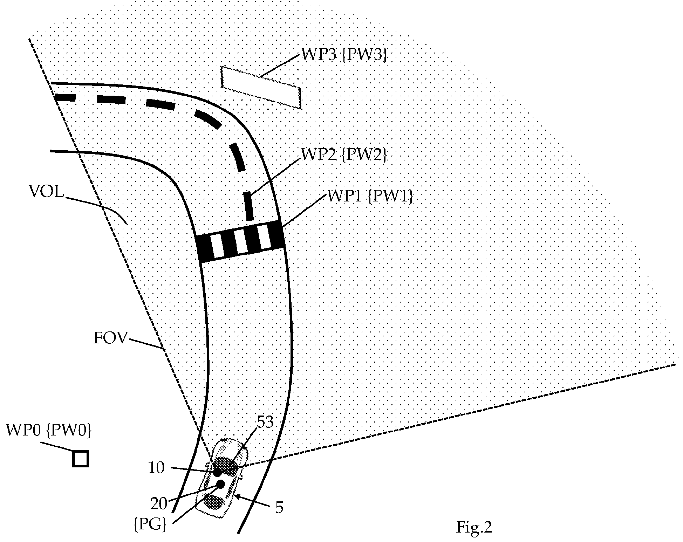

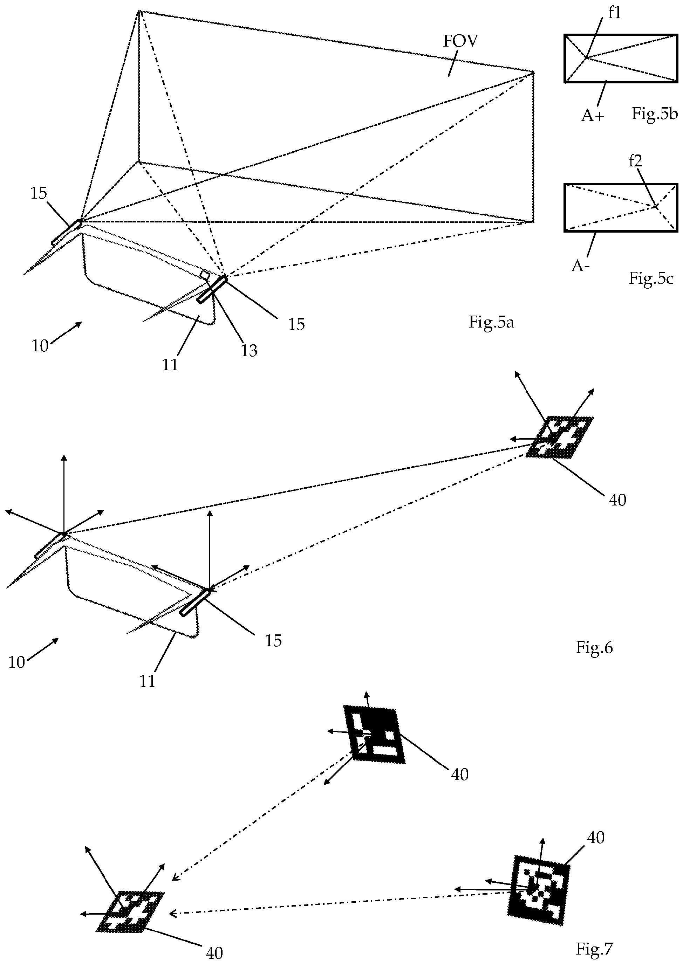

The HMD 10 comprises a transparent and/or semi-transparent screen 11, such as to allow a user wearing the HMD 10 to see through the screen 11 (as schematically illustrated in Figures 5a and 6). Furthermore, the HMD 10 is configured - for example, it comprises suitable circuitry (not shown) - to display images on the screen 11 which are superimposed on what is present in the field of view (FOV) of a user wearing the HMD 10 - referred to below as 'field of view FOV of the HMD 10' for the sake of brevity (schematically illustrated in Figure 2) -, thus creating an augmented reality effect. For this purpose the HMD 10 may comprise a local processing unit 13 configured to generate the images to be displayed on the basis of data and/or instructions provided by the processing unit 30.

Preferably, the HMD 10 comprises a pair of cameras 15 configured to frame the same region of space from different points of view (as schematically illustrated in Figures 5a-5c). Advantageously, the cameras 15 of the HMD 10 are arranged on opposite sides of a frame of the screen 11 of the HMD. Each of the cameras 15 is configured to acquire one or more images substantially corresponding to the FOV of the HMD 10. In particular, by combining the images provided by the cameras 15 at the same instants of time, it is possible to determine the field of view FOV of the HMD 10.

The processing unit 30 comprises one or more of microcontrollers, microprocessors, general purpose processors (for example, CPU) and/or graphics processors (for example, GPU), DSP, FPGA, ASIC, memory modules, power modules for supplying energy to the various components of the processing unit 30, and preferably one or more interface modules for connection to other equipment and/or to exchange data with other entities (for example, the HMD 10, the GNSS module 20, a remote server, etc.).

In particular, the processing unit 30 comprises a memory area 31 - and/or is connected to a memory module (not shown) - in which it is possible to store positions PW0-PW3 of objects of interest, also indicated with the term world point WP0-WP3 (as schematically shown in Figure 2). As will be clear, in the present description the term world point is used to indicate a physical object - such as a road or a part thereof (a curved stretch of road for example), a building, a road block, a pedestrian crossing, a monument, a billboard, a point of cultural interest, etc. - associated with a corresponding position or set of positions (i.e., an area or a volume) defined in the global reference system.

For example, the memory area 31 can be configured to store a database comprising geographic coordinates associated with each of the world points WP0-WP3 and, possibly, one or more items of information about the same world point WP0-WP3 and/or about one or multiple images associated therewith.

Alternatively or in addition, the processing unit 30 can be configured to connect to a remote navigation system 7 (for example, by accessing a software platform through a connection to a telecommunications network 8) and/or local navigation system (for example, a satellite navigator of the vehicle 5) in order to acquire one or more items of information associated with a detected position of the vehicle 5, of the HMD 10 and/or of one or more world points WP0-WP3.

In one embodiment, the processing unit 30 is configured to connect to an inertial measurement unit, or IMU 6, and/or to a data BUS 55 of the vehicle 5 on which the processing unit 30 is mounted - for example, a CAN bus - to access data (for example: speed, acceleration, steering angle, etc.) provided by on-board sensors (not shown) of the vehicle 5, to exploit a computing power, user interfaces and/or to exploit a connectivity of an on-board computer (not shown) of the vehicle 5.

In a preferred embodiment, each marker 40 comprises a fiduciary pattern - for example, a binary matrix consisting substantially of white or black pixels which allows it to be easily distinguished from the surrounding environment. Advantageously, the fiduciary pattern of each marker 40 contains an identification code which makes it possible to uniquely identify said marker 40.

Preferably, although not in a limitative manner, the markers 40 may comprise a backlight assembly (not shown) configured to backlight the fiduciary pattern of the marker 40, so as to simplify an identification of the marker 40 and the fiduciary pattern thereof based on images, in particular through the processing of the images acquired by the cameras 15 of the HMD 10.

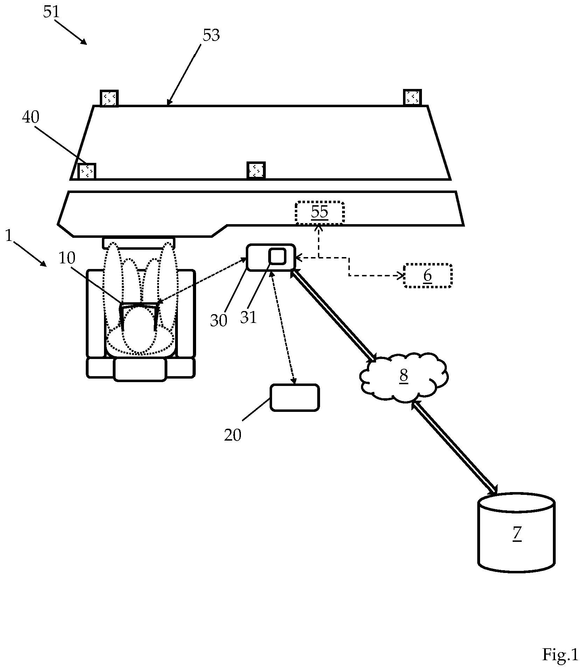

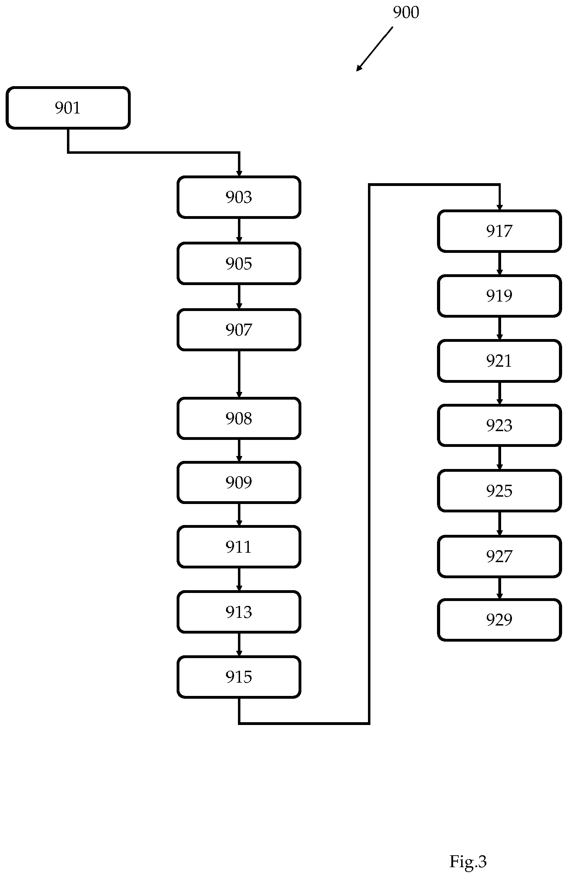

The described system 1 can be exploited by a user inside a passenger compartment 51 of a vehicle 5 (as schematically illustrated in Figure 1), to implement a method 900 of driving assistance (illustrated by the flow chart of Figure 3) which is precise and reliable, while simultaneously requiring particularly limited hardware and software resources.

In an installation step, a marker 40 is positioned inside the passenger compartment 51 of the vehicle 5 to operate as the main reference element and, preferably, a variable number of secondary markers 40, three in the example considered in the Figures, can be arranged in the passenger compartment to operate as secondary reference elements (block 901).

In the example considered, the markers 40 are positioned on, or at, a windscreen 53 of the vehicle 5. This allows to identify an orientation and a position of the HMD 10 with respect to the markers 40 and therefore the field of view FOV of the HMD 10 and, possibly, a display region R of the screen 11 on which to display images - as described below.

For example, considering a vehicle 5 with the driving position on the left as illustrated, an exemplary arrangement - which allows the orientation and position of the HMD 10 to be identified in a particularly reliable way - includes positioning a first marker 40 at one left end of the windscreen 53, a second marker 40 in a frontal position with respect to the driver's position - without obstructing the view of the path -, and a third marker 40 at a median position of the windscreen 53 with respect to a lateral extension thereof.

Subsequently, the method 900 includes a step for calibrating the system 1 which comprises an alignment procedure and a boresighting procedure.

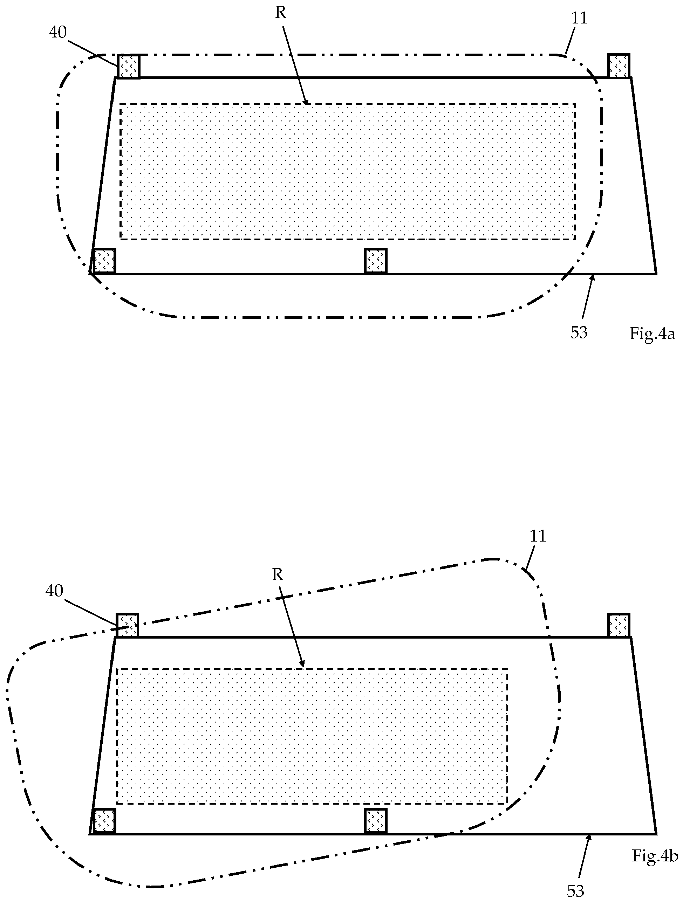

In the alignment step, a relative position is first identified among the markers 40 positioned in the passenger compartment 51. For example, during the alignment procedure, the HMD 10 is worn by a user who maintains a predetermined driving posture; preferably, with the head - and, consequently, the HMD 10 - facing the windscreen 53 (for example, as shown in Figure 4a).

Initially, a pair of images A+ and A- is acquired through the cameras 15 (block 903) substantially at the same instant of time. Preferably, a sequence of pairs of images A+ and A- is acquired during a time interval in which the HMD 10 is held in the same position or moved slowly (for example, due to normal posture corrections or changes carried out by the user wearing the HMD 10). Given the distance between the cameras 15, both images A+ and A- will substantially reproduce the same field of view FOV of the HMD 10, but observed from different observation points f1 and f2 (as can be seen in Figures 5a - 5c).

The images A+ and A- of the cameras 15 are processed to recognize each marker 40 (block 905). In the example considered, the images A+ and A- are combined together so as to exploit stereoscopy to define and identify each marker 40 framed in the images A+ and A-. For example, the images A+ and A- are identified shapes corresponding to the markers 40, while the single markers 40 are recognized by identifying the corresponding fiduciary pattern.

By analysing each acquired image, the translation and orientation of each marker 40 is calculated with respect to a reference system associated with the HMD 10, that is, a three-dimensional reference system substantially centred in the point of view of the driver wearing the HMD 10 (block 907 and schematically illustrated in Figure 6). Preferably, a translation value and a rotation value of the marker 40 with respect to each camera 15 are calculated, thus obtaining two pairs of measurements, which are subsequently combined - for example, by means of a suitable algorithm which implements averaging and/or correlation operations - to obtain corresponding combined rotation and orientation measurements associated with each marker 40. Optionally, a scale value and/or correction factors can also be determined to compensate for deformations and/or aberrations introduced by the specific features of the cameras 15 used. Alternatively or in addition, the position and the calculated orientation of each marker 40 with respect to the HDM 10 is filtered over time to remove any noise.

A main marker 40 is then selected, for example the marker 40 with the best visibility in the acquired images A+ and A- or the marker 40 having a predefined identification code, and they are calculated, preferably, by means of rototranslations - i.e., which link the position of each marker 40 to the position of the main marker 40 (block 908).

In a preferred embodiment, the rototranslations which link the position of each marker 40 to the main marker 40 are calculated for each position of the marker 40 determined by analysing pairs of images A+ and A- acquired in successive instants of time. The rototranslations calculated for each marker 40 are then time-averaged in order to obtain a single rototranslation for each marker 40 with respect to the main marker 40.

In summary, the alignment procedure allows to identify and, advantageously, store a respective rototranslation relationship which links the main marker 40 and each of the secondary markers 40 (as schematically represented by a dashed arrow in Figure 7 where the vector triads centred on the markers 40 represent respective reference systems centred on each marker 40 and the arrows represent the rototranslation operations which link the secondary markers 40 to the main marker 40).

Otherwise, the boresighting procedure of the calibration step establishes a compensation law between the position of the GNSS module 20 and the actual position of the HMD 10 - with respect to the global reference system - and, therefore, allows to calculate an optimal display of images displayed on the HMD 10 based on the measurements provided by the GNSS module 20. The compensation law is defined by identifying a rototranslation relationship between the relative reference system associated with the reference marker 40 and the global reference system associated with the GNSS module 20.

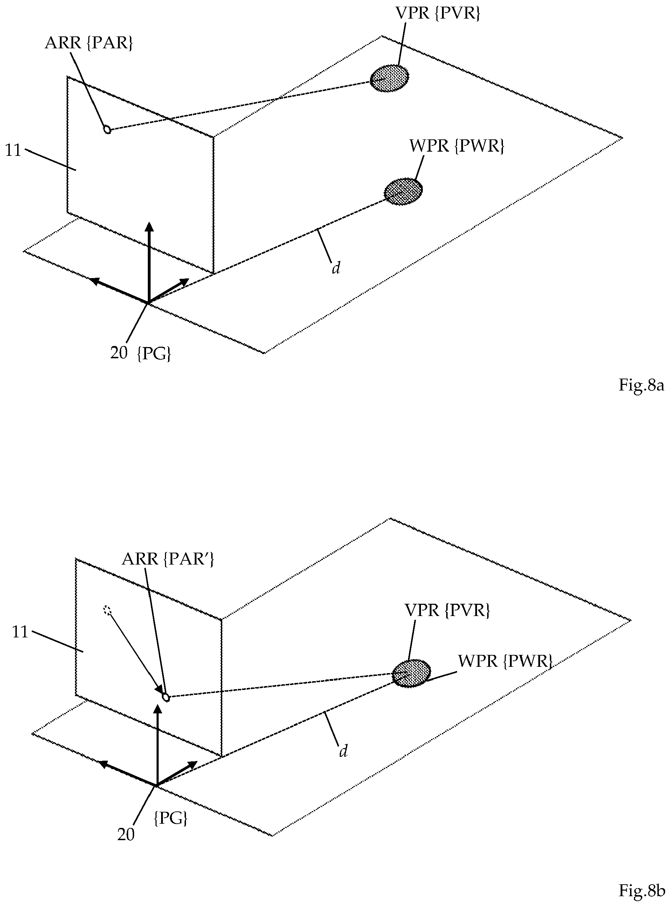

With particular reference to Figures 8a and 8b, initially the vehicle 5, in particular the GNSS module 20, is positioned at a predetermined distance d and with a known orientation from an alignment object, or boresighting world point WPR, for example a real physical object (block 909). The boresighting position PWR associated with the boresighting world point WPR is therefore known. The Applicant has identified that a straight segment can be used as a boresighting world point WPR and allow a precise boresighting of the system 1. However, the Applicant has found that a polygonal figure and/or a three-dimensional object allow a user to complete the boresighting procedure with greater simplicity.

The boresighting position PWR and the vehicle position PG measured by the GNSS module 20 are used to determine a corresponding (two-dimensional) boresighting image ARR to be displayed on the screen 11 of the HMD 10 (block 911).

Preferably, the boresighting image ARR has a shape such as to correspond to the boresighting world point WPR seen through the HMD 10.

The visualization position PAR on the HMD 10 of the boresighting image ARR corresponds to a virtual boresighting position PVP associated with a corresponding virtual object, or virtual boresighting point VPR. The virtual boresighting point VPR is a virtual replica of the boresighting world point WPR, while the virtual boresighting position PVR is a replica - in the relative reference system of the HMD 10 - of the boresighting position PWR calculated on the basis of the vehicle position provided by the GNSS module 20.

Due to the different positions of the GNSS module 20 and the HMD 10 in general, the boresighting image ARR will not be superimposed on the boresighting world point WPR. Therefore, the boresighting procedure provides that the boresighting image ARR is translated along the screen 11 of the HMD 10 until the two-dimensional image ARR - in a new visualization position PAR' - overlaps the boresighting world point WPR - visible through the windscreen 53 of the vehicle 5 (block 913). For example, the processing unit 30 may be configured to allow a user to move the boresighting image ARR, for example via a user interface (not shown) of the processing unit 30 or via a user interface of a device connected to the processing unit (for example the HMD 10 itself, or a personal computer, a smartphone, a tablet, an on-board computer of the vehicle 5, etc.).

The translation on the screen 11 of the HMD 10 which leads to the superimposition of the boresighting image ARR and the boresighting world point WPR is, therefore, processed to determine a compensation law capable of compensating for a discrepancy - or offset - between the boresighting image ARR and the boresighting world point WPR (block 915).

For example, the compensation law can be defined by a compensation matrix based on a rototranslation relationship between the virtual boresighting position PVR - associated with the virtual boresighting point VPR to which the boresighting image ARR corresponds - and the alignment position PWR - associated with the reference world point WPR.

In fact, the boresighting procedure allows to simply and effectively determine a rototranslation relationship between the position of the GNSS module 20 and the position of the HMD 10, identifiable thanks to the detection of at least one of the markers 40 - i.e., a reference element integral with the vehicle 5. In other words, the rototranslation relationship relates the position of the GNSS module 20 to the position of at least one marker 40 located in a static position inside the passenger compartment 51 of the vehicle. This allows to precisely and accurately define the actual position of the HMD 10 in the global coordinate system used by the GNSS module 20.

In summary, the compensation law allows to correct the error introduced by the different global position of the HMD 10 through which the user observes the environment and the global position detected by the GNSS module 20. By applying the compensation law it is possible to correct the reproduction position of any image on the HMD 10 so that it corresponds to a relative world point WPR regardless of the movements of the HMD 10 inside the passenger compartment 51 due, for example, to movements of the head of the user wearing the HMD 10.

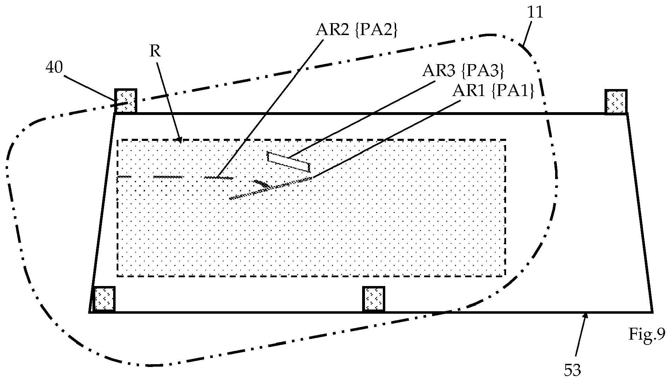

Once the calibration step has been completed, in an operative step of the method 900, the system 1 is able to display in real time on the HMD 10 one or more images AR1-3 associated with corresponding world points WP1-3, positioning them with high accuracy and precision on the screen 11 of the HMD 10 (as schematically illustrated in Figure 9).

Initially, the pose of the HMD 10 with respect to the markers 40 (block 917) is determined. In other words, a relative position of the HMD 10 with respect to the marker 40 is determined, which is mounted inside the vehicle 5 and integral therewith.

In a preferred embodiment, the calculation of the pose of each camera 15 with respect to each recognized marker 40 is performed. In other words, pairs of images A+ and A- are acquired by the cameras 15 to identify the relative position between cameras 15 and marker 40.

For example, the pose of each camera 15 with respect to a marker 40 can be identified, through an algorithm based on what is described in F. Ababsa, M. Mallem, "Robust Camera Pose Estimation Using 2D Fiducials Tracking for Real-Time Augmented Reality Systems" International conference on Virtual Reality continuum and its applications in industry, pp. 431-435, 2004. In addition or alternatively, the algorithm configured to identify the pose of the cameras can be based on the teachings contained in Madjid Maidi, Jean-Yves Didier, Fakhreddine Ababsa, Malik Mallem: "A performance study for camera pose estimation using visual marker-based tracking", published in Machine Vision and Application, Volume 21, Issue 3, pages 265-376, year 2010, and/or in Francisco J. Romero-Ramirez, Rafael Munoz-Salinas, Rafael Medina-Carnicer: "Speeded Up Detection of Squared Fiducial Markers" published in Image and Vision Computing, Volume 76, year 2018.

Subsequently, the rotation and translation measurements are combined - for example, by means of an appropriate algorithm which implements averaging and/or correlation operations - to obtain corresponding measurements of rotation and orientation of the HMD 10 with respect to each of the identified markers 40.

Advantageously, the rototranslation relationships between secondary markers 40 and main markers 40 determined in the calibration step are applied to the poses of the HMD 10 calculated with respect to the secondary markers 40 so as to obtain a set of poses of the HMD 10 all referred to the main marker 40, which are then combined with each other - for example, by means of an appropriate algorithm which implements averaging and/or correlation operations - in order to obtain a combined pose of the HMD 10 with respect to the main marker 40, which is particularly precise. In other words, the orientation and position of the HMD 10 with respect to the main marker 40, i.e., with respect to a relative reference system, are determined.

Furthermore, one or more identified markers 40 can be used to define the shape and extent of a display region R of the screen 11 in which images will be displayed, for example so that the images are displayed superimposed on the windscreen 53 of the vehicle 5 or a portion thereof (as schematically illustrated in Figures 4a and 4b).

Subsequently, or in parallel, the vehicle position PG is detected through the GNSS module 20 (block 919).

The vehicle position PG is then modified by applying the compensation law defined during the calibration step in order to determine the position of the HMD 10 with respect to the global reference system (block 921 and Figure 2).

In the preferred embodiment, the vehicle position PG is modified through the rototranslation relationship determined during the boresighting procedure, allowing to convert the relative position of the HMD 10 determined with respect to the main marker 40 into a position referred to the global reference system - for example, geographic coordinates.

In other words, thanks to the compensation law, the position and orientation of the HMD 10 with respect to the global reference system are determined in real time.

Based on the orientation defined by the pose of the HMD 10, a view volume VOL is determined, i.e., the volume of space comprised in the field of view FOV of the HMD 10 (block 923). Preferably, the view volume VOL (schematically illustrated in Figure 2) extends within a distance - i.e., a depth of the field of view FOV - predetermined by a current position of the HMD 10 - possibly modified based on parameters acquired by the IMU 6 and/or by vehicle sensors 5 such as the speed and/or acceleration of the vehicle 5.

Subsequently, it is verified whether one or more of the positions of interest PW0-3 of the world points WP0-3 stored in the memory area 31 are comprised in the view volume VOL (block 925).

For each position of interest PW1-3 comprised in the view volume VOL, a corresponding visualization position PA1-3 is calculated such that the user wearing the screen sees each image AR1-3 at the respective world point WP1-3 (block 927). Advantageously, the shape and other characteristics of the images AR1-3 can be based on information - for example, geometric information - relating to the corresponding world point WP0-3 - preferably, contained in the memory area 31 associated with the positions of interest PW0-3.

The images AR1-3 are then reproduced on the HMD 10 each in the corresponding visualization position PA1-3. Preferably, each image AR1-3 is displayed if it is comprised in the display region R of the screen 11 superimposed on the windscreen 53 of the vehicle. For example, the images AR1-3 can be generated so as to be displayed in the respective visualization positions PA1-3 corresponding to as many positions of interest PW1-3 by implementing an analogous algorithm of the *'worldToImage'* function of the *Computer Vision Toolbox*^{™} comprised in the software product *MATLAB*^{®} and described in *"*Computer Vision Toolbox™ Reference" revision for version 9.0 (Release R2019a), March 2019 of The MathWorks, Inc.

Furthermore, the method 900 provides for modifying the two-dimensional image AR, associated with a world point WP1-3 (for example, through variations in scale, perspective, etc.), as a function of the time and/or distance between the position of the HMD 10 and such world point WP1-3 (block 929). In other words, a pursuit or tracking of each world point WP1-3 is provided as long as it is comprised in the view volume VOL as a function of the movement of the vehicle 5 (for example, estimated based on the variation of the position of the vehicle 5). Furthermore, it is provided to dynamically modify the shape and/or position of the images AR1-3 displayed on the HMD 10 so that each of the images AR1-3 is correctly associated with the corresponding world point WP1-3.

In other words, during the operative step the method 900 allows to display on the HMD 10 two-dimensional images (such as driving trajectories, speed limits, information about road conditions, atmospheric conditions and/or relative to points of interest comprised in the FOV, such as cities, buildings, monuments, commercial establishments, etc.) which precisely and reliably integrate with what is visible in the field of view FOV of the user wearing the HMD 10. Advantageously, the method 900 is configured to modify in real time the shape and visualization position of the images AR1-3 displayed to adapt to position variations of both the vehicle 5 and the HMD 10.

For example, in one embodiment, the processing unit 30 is configured to exploit the measurements acquired by the IMU and/or the sensors of the vehicle 5 in order to increase a positioning accuracy of the images on the HMD 10 and/or provide images containing more detailed and/or additional items of information.

Eventually, during the boresighting procedure, the possibility of scaling the boresighting image ARR can also be provided in order to guarantee an optimal overlap between the latter and the reference world point. In this case, the boresighting image ARR scaling operation can also be considered in evaluating the discrepancy between the boresighting image ARR and the reference world point WPR.

Furthermore, nothing prohibits automating the overlapping step between the boresighting image ARR and the boresighting world point WPR during the boresighting procedure. For example, the processing unit 30 can be configured to identify the boresighting world point WPR when framed in the field of view FOV of the HMD 10 and then superimpose the boresighting image ARR on the boresighting world point WPR automatically, or directly determine the discrepancy between the boresighting image ARR at the boresighting world point WPR automatically by applying one or more suitable algorithms.

In one embodiment, the method 900 provides for periodic access to the GNSS data database 7 in order to verify the presence of new world points in a geographic area of interest, for example in the view volume.

As will be evident, after the alignment procedure described above, the system 1 can be configured to operate using any number of markers 40. For example, a pair of markers 40 or a single marker 40 can be used to determine the pose of the HMD 10 during the operative step of the method 900. This allows to adjust the computational load required by the system 1 to provide driving assistance in real time, with a better overall responsiveness of the system 1 to variations due to the movement of the vehicle 5 and/or of the world points WP0-3. Furthermore, this allows to adjust a relationship between the accuracy of identification of the pose of the HMD 10 and the computational load required of the processing unit 30.

In one embodiment, for each world point WP1-3 to be displayed, the method 900 provides for defining a relative virtual point with respect to at least one identified marker 40. If one or more secondary markers are identified, the rototranslation relationship is applied to the relative virtual points calculated with respect to the secondary markers in order to redefine these relative virtual points with respect to the main marker. A definitive virtual point is determined by combining all relative virtual points referring to the main marker - preferably, by means of an appropriate algorithm comprising, for example, averaging and/or correlation operations. The final virtual point is then converted into a corresponding image to be displayed by applying the compensation law in order to correct the position of the virtual point in the image defined in the two-dimensional reference system of the surface of the screen 11 of the HMD 10.

In an embodiment not shown, when a world point, for example the world point WP0 in Figure 2, is not comprised in the view volume VOL, it is possible to provide that a corresponding virtual indicator - for example, an arrow - is displayed on the HMD 10 - for example, reproduced at the edge of the display region R - with a tip pointing towards the position of the corresponding world point WP0. In addition to the arrow, other information about the world point WP0 outside the display region R, such as a name of the world point WP0, a distance, etc. can be displayed.

In an alternative embodiment, the images AR can be reproduced with false colours based on the distance from the vehicle 5, a driving hazard associated with the relative world point and/or for conveying other information.

Nothing prohibits implementing and/or omitting one or more optional steps of the method 900, just as nothing prohibits executing two or more steps in parallel or in a different order.

Moreover, one or more implementation details can be replaced by other technically equivalent elements.

For example, in addition to or alternatively to ArUco markers 30, other reference elements 30 can be used such as one or more Data Matrix, QRcode, and/or other types of reference elements.

Naturally, it is possible to provide alternative arrangements of the markers 40 also composed of a different (greater or lesser) number of markers 40; finally, nothing prohibits having a single marker 40 to implement the method 900 described above.

Furthermore, the markers 40 can be arranged in additional and/or alternative positions. For example, one or more markers 40 can be positioned at one of the windows or on the rear window of the vehicle 5 in order to allow the reproduction of augmented reality images positioned correctly even when the user moves his gaze towards them.

Preferably, although not limitingly, the markers 40 are made on the basis of the teachings contained in Francisco J. Romero-Ramirez, Rafael Muñoz-Salinas, Rafael Medina-Carnicer: "Speeded up detection of squared fiducial markers" published in Image and Vision Computing, volume 76, pages 38-47, year 2018; in S. Garrido-Jurado, R. Muñoz Salinas, F.J. Madrid-Cuevas, R. Medina-Carnicer: "Generation of fiducial marker dictionaries using mixed integer linear programming" published in Pattern Recognition volume 51, pages 481-491, year 2016, and/or in Garrido-Jurado, Sergio, et al.: "Automatic generation and detection of highly reliable fiducial markers under occlusion" published in Pattern Recognition, volume 47, number 6, pages 2280-2292, year 2014.

Furthermore, although in the exemplary embodiment described above it has been indicated that the compensation law is applied to the - global - position detected by the GNSS module 20, nothing prohibits defining a corresponding compensation law applicable to the - relative - position of the HMD 10 inside the vehicle 5 determined on the basis of the markers 40.

In addition, nothing prohibits identifying the position and orientation of the HMD 10 through two separate operations, which can be carried out in sequence and / or in parallel, rather than through a single operation as described above.

Although the Applicant has identified that the use of markers 40 is particularly advantageous, nothing prohibits the implementation of alternative methods in which the position and orientation of the HMD with respect to the windscreen and/or other elements of the passenger compartment are identified differently, for example through the use of video and/or photo cameras aimed at the driver and/or one or more motion sensors mounted on the HMD.

The system 1 can be provided as a kit of components to be assembled inside the passenger compartment of a vehicle. In detail, the kit comprises at least a processing unit 30, a dedicated GNSS module 20 - or, alternatively, a wired and/or wireless connection element between processing units to a GNSS module of the vehicle and an HMD 10, preferably, comprising two cameras 10, and connectable to the processing unit. Alternatively, the processing unit 30 can be configured to operate with one or more commercially available HMDs (e.g., Microsoft HoloLens). Therefore one or more versions of the kit does not necessarily comprise an HMD.

Alternatively, nothing prohibits integrating the processing unit 30 into the vehicle 5 or into a user device which can be connected to the vehicle (smartphone, tablet, computer, etc.) or from instantiating a software product configured to implement the method 900 in a processing unit of the vehicle 5 or user device.

Furthermore, the connections between the elements of the system 1 - in particular, between the processing unit 30 and the HMD 10 - can be both of the wired type and, preferably, wireless. Similarly, the connection with the elements of the system 1 and other elements - for example, between the processing unit 30 and the IMU, the ECU (not shown) of the vehicle 5, the infotainment system (not shown) of the vehicle 5, etc. - can be either wired or wireless.

In practice, the materials used, as well as the contingent shapes and sizes, can be whatever according to the requirements without for this reason departing from the scope of protection of the following claims.

## Claims

1. Method (900) for assisting the driving of a vehicle (5) implemented by a system (1) comprising an HMD (10), a reference element (40) arranged inside the vehicle (5) and a positioning module (20) mounted on the vehicle (5), the method (900) including the steps of:
- detecting (919) a vehicle position by means of the positioning module (20), said position being defined with respect to a global reference system;
- based on the detect position of the vehicle (5), determining a position of the HMD (10) with respect to the global reference system;
- based on the position of the HMD (10), determining (923) a view volume (VOL) corresponding to a volume of space included in the field of view (FOV) of the HMD (10);
- comparing (925) a set of positions included in the view volume (VOL) with at least one position of interest (PW1-3) associated with an object of interest (WP1-3) stored in a memory area (31) of the system (1), and
- if one or more positions of interest (PW1 -3) are comprised in the view volume (VOL), calculating (927) a visualization position (PA1-3) of the HMD (10) in which to display an image (AR1-3) associated with the object of interest (WP1-3) and displaying on the HMD (10) the image (AR1-3) in said visualization position (PA1-3), the visualization position (PA1-3) being such that a user wearing the HMD (10) sees the image (PA1-3) in correspondence of the object of interest (WP1-3),
wherein the step of determining a position of the HMD (10) with respect to the global reference system based on the detected position of the vehicle (5) comprises:
- determining (909-915) a compensation law defined by identifying a rototranslation relationship between the global reference system and a relative reference system associated with the reference element (40);
- by means of the HMD (10), acquiring at least one image of the reference element (40) located inside the vehicle (5);
- determining (917) a relative position of the HMD (10) with respect to the reference element (40) by processing the acquired image, said relative position being referred to the relative reference system associated with the reference element (40), and
- converting (921) the relative position of the HMD (10) with respect to the reference element (40) into a corresponding position referred to global reference system by applying the rototranslation relationship.

2. The method (900) according to claim 1, wherein the HMD (10) comprises at least two video cameras (15) arranged on opposite sides of a screen (11) of the HMD (10), and in which the step of determining (917) a relative position of the HMD (10) with respect to the reference element (40) comprises:
- using each camera (15) of the HMD (10), for acquiring an image of the reference element (40) located inside the vehicle (5);
- calculating a relative position of each camera (15) with respect to the reference element (40) by processing the respective acquired image;
- calculating the relative position of the HMD (10) with respect to the reference element (40) by combining the relative positions of the cameras (15).

3. The method according to claim 1 or 2, wherein the system (1) comprises a plurality of reference elements (40) of which one selected reference element acts as the main reference element and the other reference elements acts as secondary reference elements, the method further comprising the step of:
- for each secondary reference element, calculating (903-908) a reference relationship corresponding to a rototranslation relationship between the secondary reference element and the main reference element, and
wherein the step of determining (917) a relative position of the HMD (10) with respect to the reference element (40) comprises:
- calculating the relative position of the HMD (10) with respect to at least two reference elements (40) selected in a set comprising the main reference element and the secondary reference elements;
- applying the rototranslation relationship to the relative position of the HMD (10) calculated with respect to each selected secondary reference element, and
- calculating a combined relative position of the HMD (10) relative to the main reference element by combining the relative positions calculated with respect to the at least two reference elements after having applied the rototranslation relationship to the relative position of the HMD (10) calculated with respect to each selected secondary reference element.

4. The method (900) according to any one of the preceding claims, wherein the step of determining (923) a view volume (VOL) comprises:
- calculating an orientation of the HMD (10) with respect to the reference element (40) by processing the at least one acquired image, and
- determining the field of view (FOV) of the HMD (10) based on the global position of the HMD (10) and the orientation of the HMD (10) with respect to the reference element (40).

5. The method (900), according to any one of the previous claims further comprising the steps of:
- selecting (909) a boresighting position (PWR);
- displaying (911) a boresighting image (ARR) in a visualization position (PAR) on the HMD (10), said visualization position (PAR) being calculated according to the boresighting position (PWR) and to the vehicle position;
- measuring (913) a position discrepancy between the boresighting position (PWR) and the visualization position (PAR), and
- determining (915) said compensation law based on said discrepancy.

6. The method (900) according to claim 5, in which to measure a discrepancy position between the boresighting position (PWR) and the visualization position (PAR) comprises:
- define a rototranslation relationship between a virtual boresighting position (PVR) and the boresighting position (PWR), said virtual boresighting position (PVR) corresponding to the projection of the visualization position (PAR) in a three-dimensional reference system, and
determining said compensation law comprises:
- using said rototranslation relationship to determine said compensation law.

7. The method (900) according to claim 6, wherein in the boresighting position (PW) is situated a boresighting object, and
wherein defining a rototranslation relationship comprises:
- orientating the HMD (10) so as to include in the field of view (FOV) of the HMD (10) the boresighting object;
- translating the boresighting image (ARR) displayed on the HMD (10) until obtaining an overlap of the boresighting image (ARR) with the boresighting object (WPR) in the boresighting position (PWR), and
- converting said translation of the boresighting image (ARR) in a two-dimensional reference system in a translation and a rotation of the virtual boresighting position (PVR) in the three-dimensional reference system.

8. The method (900) according to any one of the preceding claims, further comprising the step of:
- acquiring vehicle movement information (5) and,
wherein the step of displaying on the HMD (10) an image associated with the object of interest comprises:
- modifying the image as a function of the movement of the vehicle (5) and of time.

9. System (1) for assisting the driving of a vehicle (5) comprising:
- an HMD (10);
- at least one reference element (40) arranged inside the vehicle (5)
- a positioning module (20) mounted on the vehicle configured to detect a vehicle position,
- a memory area (31) in which at least one position of interest associated with an object of interest is stored, and
- a processing unit (30) operatively connected to the positioning module (20), to the HMD (10), and configured to implement the method (900) according to any one of the previous claims.

10. The system (1) according to claim 9, wherein the processing unit (30) is operatively connected to at least one of:
- a BUS (55) for vehicle communication (5), and
- an inertial measurement unit (6),
for acquiring vehicle information (5).

## Patentansprüche

1. Verfahren (900) zur Unterstützung des Steuerns eines Fahrzeugs (5), umgesetzt durch ein System (1) aufweisend ein HMD (10), ein Referenzelement (40), welches innerhalb des Fahrzeugs (5) angeordnet ist, und ein Positionierungsmodul (20), welches an dem Fahrzeug (5) befestigt ist, wobei das Verfahren (900) folgende Schritte aufweist:
- Erfassen (919) einer Fahrzeugposition mittels des Positionierungsmoduls (20), wobei die Position in Bezug auf ein globales Referenzsystem definiert wird;
- Bestimmen einer Position des HMD (10)in Bezug auf das globale Referenzsystem, basierend auf der erfassten Position des Fahrzeugs (5);
- Bestimmen (923) eines Sichtvolumens (VOL), welches einem Raumvolumen innerhalb des Sichtbereichs (FOV) des HMD (10) entspricht, basierend auf der Position des HMD (10);
- Vergleichen (925) einer Zahl von Positionen in dem Sichtvolumen mit mindestens einer Position von Interesse (PW1-3), welche mit einem Objekt von Interesse (WP1-3), welches in einem Speicherbereich (31) des Systems (1) gespeichert ist, assoziiert ist, und
- Berechnen (927) einer Darstellungsposition (PA1-3) des HMD (10), in welcher ein mit dem Objekt von Interesse (WP1-3) assoziiertes Bild (AR1-3) dargestellt werden soll, falls eine oder mehrere der Positionen von Interesse (PW1-3) in dem Sichtvolumen (VOL) enthalten sind, und Anzeigen des Bildes (AR1-3) auf dem HMD (10) in der Darstellungsposition (PA1-3), wobei die Darstellungsposition (PA1-3) derart ausgestaltet ist, dass ein das HMD (10) tragender Benutzer das Bild (PA1-3) in Verbindung mit dem Objekt von Interesse (WP1-3) sieht,
wobei Schritt des Bestimmens einer Position des HMD (10) in Bezug auf das globale Referenzsystem basierend auf der erfassten Position des Fahrzeugs (5) aufweist:
- Bestimmen (909-915) einer Ausgleichsregel, welche durch Identifizieren einer Drehverschiebungs-Beziehung zwischen dem globalen Referenzsystem und einem relativen Referenzsystem, welches mit dem Referenzelement (40) assoziiert ist, definiert wird;
- Erfassen von zumindest einem Bild des sich innerhalb des Fahrzeugs (5) befindenden Referenzelements (40) mittels des HMD (10);
- Bestimmen (917) einer relativen Position des HMD (10) in Bezug auf das Referenzelement (40) durch Verarbeiten des erfassten Bildes, wobei sich die relative Position auf das relative Referenzsystem, welches mit dem Referenzelement (40) assoziiert ist, bezieht;
- Umwandeln (921) der relativen Position des HMD (10) in Bezug auf das Referenzelement (40) in eine entsprechende Position in Bezug auf das globale Referenzsystem durch Anwenden der Drehverschiebungs-Beziehung.

2. Verfahren (900) nach Anspruch 1, wobei das HMD (10) mindestens zwei Videokameras (15), welche an gegenüberliegenden Seiten eines Bildschirms (11) des HMD (10) angeordnet sind, aufweist, und wobei der Schritt des Bestimmens (917) einer relativen Position des HMD (10) in Bezug auf das Referenzelement (40) aufweist:
- Verwenden jeder Kamera (15) des HMD (10) zur Erfassung eines Bildes des sich innerhalb des Fahrzeugs (5) befindenden Referenzelements (40);
- Berechnen einer relativen Position jeder Kamera (15) in Bezug auf das Referenzelement (40) durch Verarbeiten des entsprechenden erfassten Bildes;
- Berechnen der relativen Position des HMD (10) in Bezug auf das Referenzelement (40) durch Kombinieren der relativen Positionen der Kameras (15).

3. Verfahren (900) nach Anspruch 1 oder 2, wobei das System (1) eine Vielzahl von Referenzelementen (40) aufweist, wobei ein ausgewähltes Referenzelement als Hauptreferenzelement agiert und die übrigen Referenzelemente als Nebenreferenzelemente agieren, wobei das Verfahren (900) weiterhin folgenden Schritt aufweist:
- Berechnen (903-908) einer Bezugsbeziehung, welche einer Drehverschiebungs-Beziehung zwischen dem Nebenreferenzelement und dem Hauptreferenzelement entspricht, für jedes Nebenreferenzelement;
wobei der Schritt des Bestimmens (917) einer relativen Position des HMD (10) in Bezug auf das Referenzelement (40) aufweist:
- Berechnen der relativen Position des HMD (10) in Bezug auf zumindest zwei Referenzelemente (40), welche aus einer Menge beinhaltend das Hauptreferenzelement und die Nebenreferenzelemente ausgewählt werden;
- Anwenden der Drehverschiebungs-Beziehung auf die relative Position des HMD (10), welche in Bezug auf jedes ausgewählte Nebenreferenzelement berechnet wurde;
- Berechnen einer kombinierten relativen Position des HMD (10) in Bezug auf das Hauptreferenzelement durch Kombinieren der relativen Positionen, welche in Bezug auf die mindestens zwei Referenzelemente berechnet wurden, nachdem die Drehverschiebungs-Beziehung auf die relative Position des HMD (10), welche in Bezug auf jedes ausgewählte Nebenreferenzelement berechnet wurde, angewandt wurde.

4. Verfahren (900) nach einem der vorhergehenden Ansprüche, wobei der Schritt des Bestimmens (923) eines Sichtvolumens (VOL) aufweist:
- Berechnen einer Ausrichtung des HMD (10) in Bezug auf das Referenzelement (40) durch Verarbeiten des mindestens einen erfassten Bildes; und
- Bestimmen des Sichtbereichs (FOV) des HMD (10) basierend auf der globalen Position des HMD (10) und der Ausrichtung des HMD (10) in Bezug auf das Referenzelement (40).

5. Verfahren (900) nach einem der vorhergehenden Ansprüche, weiterhin aufweisend folgende Schritten:
- Auswählen (909) einer Mittelachsenposition (PWR);
- Anzeigen (911) eines Mittelachsenbildes (ARR) in einer Darstellungsposition (PAR) des HMD (10), wobei die Darstellungsposition (PAR) gemäß der Mittelachsenposition (PWR) und der Fahrzeugposition berechnet wird;
- Messen (913) einer Positionsabweichung zwischen der Mittelachsenposition (PWR) und der Darstellungsposition (PAR), und
- Bestimmen (915) der Ausgleichsregel basierend auf der Positionsabweichung.

6. Verfahren (900) nach Anspruch 5, wobei das Messen einer Abweichungsposition zwischen der Mittelachsenposition (PWR) und der Darstellungsposition (PAR) aufweist:
- Definieren einer Drehverschiebungs-Beziehung zwischen einer virtuellen Mittelachsenposition (PVR) und der Mittelachsenposition (PWR), wobei die virtuelle Mittelachsenposition (PVR) der Projizierung der Darstellungsposition (PAR) in einem dreidimensionalen Referenzsystem entspricht, und
wobei das Bestimmen der Ausgleichsregel aufweist:
- Verwenden der Drehverschiebungs-Beziehung zur Bestimmung der Ausgleichsregel.

7. Verfahren (900) nach Anspruch 6, wobei die Mittelachsenposition (PW) in einem Mittelachsenobjekt angeordnet ist, und
wobei das Definieren einer Drehverschiebungs-Beziehung aufweist:
- Ausrichten des HMD (10) derart, dass der Sichtbereich (FOV) des HMD (10) das Mittelachsenobjekt beinhaltet;
- Verschieben des auf dem HMD (10) angezeigten Mittelachsenbildes (ARR) bis ein Überlappen des Mittelachsenbildes (ARR) mit dem Mittelachsenobjekt (WPR) in der Mittelachsenposition (PWR) erreicht wird, und
- Umwandeln des Verschiebens des Mittelachsenbildes (ARR) in einem zweidimensionalen Referenzsystem in eine Drehung und eine Verschiebung der virtuellen Mittelachsenposition (PVR) in dem dreidimensionalen Referenzsystem.

8. Verfahren (900) nach einem der vorhergehenden Ansprüche, weiterhin aufweisend folgenden Schritt:
- Erfassen von Fahrzeugbewegungsinformation (5) und,
wobei der Schritt des Anzeigens eines Bildes, welches mit dem Objekt von Interesse (WP1-3) assoziiert ist, auf dem HMD (10) aufweist:
- Abändern des Bildes als eine Funktion der Bewegung des Fahrzeugs (5) und Zeit.

9. System (1) zur Unterstützung des Lenkens eines Fahrzeugs (5), aufweisend:
- ein HMD (10);
- mindestens ein Referenzelement (40), welches innerhalb des Fahrzeugs (5) angeordnet ist;
- ein Positionierungsmodul (20), welches an dem Fahrzeug (5) befestigt ist und dazu ausgebildet ist, eine Position des Fahrzeugs (5) zu erfassen,
- ein Speicherbereich (31), in welchem mindestens eine Position von Interesse, welche mit einem Objekt von Interesse assoziiert ist, gespeichert ist, und
- eine Verarbeitungseinheit (30), welche operativ mit dem Positionierungsmodul (20) und dem HMD (10) verbunden ist und dazu ausgebildet ist, das Verfahren (900) nach einem der vorhergehenden Ansprüche auszuführen.

10. System (1) nach Anspruch 9, wobei die Verarbeitungseinheit (30) operativ verbunden ist mit zumindest einem von:
- einem BUS (55) zur Fahrzeugkommunikation (5), und
- einer inertialen Messeinheit,
um Fahrzeuginformationen (5) zu erfassen.

## Revendications

1. - Procédé (900) d'aide à la conduite d'un véhicule (5) mis en oeuvre par un système (1) comprenant un visiocasque (HMD) (10), un élément de référence (40) disposé à l'intérieur du véhicule (5), et un module de positionnement (20) monté sur le véhicule (5), le procédé (900) comprenant les étapes :
- détecter (919) une position de véhicule au moyen du module de positionnement (20), ladite position étant définie par rapport à un système de référence global ;
- sur la base de la position détectée du véhicule (5), déterminer une position du HMD (10) par rapport au système de référence global ;
- sur la base de la position du HMD (10), déterminer (923) un volume de vision (VOL) correspondant à un volume d'espace compris dans le champ de vision (FOV) du HMD (10) ;
- comparer (925) un ensemble de positions comprises dans le volume de vision (VOL) à au moins une position d'intérêt (PW1-3) associée à un objet d'intérêt (WP1-3) stocké dans une zone de mémoire (31) du système (1), et
- si une ou plusieurs positions d'intérêt (PW1-3) sont comprises dans le volume de vision (VOL), calculer (927) une position de visualisation (PA1-3) du HMD (10) dans laquelle afficher une image (AR1-3) associée à l'objet d'intérêt (WP1-3) et afficher sur le HMD (10) l'image (AR1-3) dans ladite position de visualisation (PA1-3), la position de visualisation (PA1-3) étant telle qu'un utilisateur portant le HMD (10) voit l'image (PA1-3) en correspondance avec l'objet d'intérêt (WP1-3),
l'étape de détermination d'une position du HMD (10) par rapport au système de référence global sur la base de la position détectée du véhicule (5) comprenant :
- déterminer (909-915) une loi de compensation définie par identification d'une relation de roto-translation entre le système de référence global et un système de référence relatif associé à l'élément de référence (40) ;
- au moyen du HMD (10), acquérir au moins une image de l'élément de référence (40) situé à l'intérieur du véhicule (5) ;
- déterminer (917) une position relative du HMD (10) par rapport à l'élément de référence (40) par traitement de l'image acquise, ladite position relative étant rapportée au système de référence relatif associé à l'élément de référence (40) ; et
- convertir (921) la position relative du HMD (10) par rapport à l'élément de référence (40) en une position correspondante rapportée au système de référence global par application de la relation de roto-translation.

2. - Procédé (900) selon la revendication 1, dans lequel le HMD (10) comprend au moins deux caméras vidéo (15) disposées sur des côtés opposés d'un écran (11) du HMD (10), et dans lequel l'étape de détermination (917) d'une position relative du HMD (10) par rapport à l'élément de référence (40) comprend :
- utiliser chaque caméra (15) du HMD (10), pour acquérir une image de l'élément de référence (40) situé à l'intérieur du véhicule (5) ;
- calculer une position relative de chaque caméra (15) par rapport à l'élément de référence (40) par traitement de l'image acquise respective ;
- calculer la position relative du HMD (10) par rapport à l'élément de référence (40) par combinaison des positions relatives des caméras (15).

3. - Procédé selon la revendication 1 ou 2, dans lequel le système (1) comprend une pluralité d'éléments de référence (40) dont un élément de référence sélectionné sert d'élément de référence principal et les autres éléments de référence servent d'éléments de référence secondaires, le procédé comprenant en outre l'étape :
- pour chaque élément de référence secondaire, calculer (903-908) une relation de référence correspondant à une relation de roto-translation entre l'élément de référence secondaire et l'élément de référence principal, et
l'étape de détermination (917) d'une position relative du HMD (10) par rapport à l'élément de référence (40) comprenant :
- calculer la position relative du HMD (10) par rapport à au moins deux éléments de référence (40) sélectionnés dans un ensemble comprenant l'élément de référence principal et les éléments de référence secondaires ;
- appliquer la relation de roto-translation à la position relative du HMD (10) calculée par rapport à chaque élément de référence secondaire sélectionné ; et
- calculer une position relative combinée du HMD (10) par rapport à l'élément de référence principal par combinaison des positions relatives calculées par rapport aux au moins deux éléments de référence après avoir appliqué la relation de roto-translation à la position relative du HMD (10) calculée par rapport à chaque élément de référence secondaire sélectionné.

4. - Procédé (900) selon l'une quelconque des revendications précédentes, dans lequel l'étape de détermination (923) d'un volume de vision (VOL) comprend :
- calculer une orientation du HMD (10) par rapport à l'élément de référence (40) par traitement de l'au moins une image acquise ; et
- déterminer le champ de vision (FOV) du HMD (10) sur la base de la position globale du HMD (10) et de l'orientation du HMD (10) par rapport à l'élément de référence (40).

5. - Procédé (900) selon l'une quelconque des revendications précédentes, comprenant en outre les étapes :
- sélectionner (909) une position de pointage (PWR) ;
- afficher (911) une image de pointage (ARR) dans une position de visualisation (PAR) sur le HMD (10), ladite position de visualisation (PAR) étant calculée en fonction de la position de pointage (PWR) et de la position de véhicule ;
- mesurer (913) un écart de position entre la position de pointage (PWR) et la position de visualisation (PAR) ; et
- déterminer (915) ladite loi de compensation sur la base dudit écart.

6. - Procédé (900) selon la revendication 5, dans lequel mesurer une position d'écart entre la position de pointage (PWR) et la position de visualisation (PAR) comprend :
- définir une relation de roto-translation entre une position de pointage virtuelle (PVR) et la position de pointage (PWR), ladite position de pointage virtuelle (PVR) correspondant à la projection de la position de visualisation (PAR) dans un système de référence tridimensionnel, et
déterminer ladite loi de compensation comprend :
- utiliser ladite relation de roto-translation pour déterminer ladite loi de compensation.

7. - Procédé (900) selon la revendication 6, dans lequel dans la position de pointage (PW) se trouve un objet de pointage et dans lequel définir une relation de roto-translation comprend :
- orienter le HMD (10) de façon à inclure, dans le champ de vision (FOV) du HMD (10), l'objet de pointage ;
- déplacer en translation l'image de pointage (ARR) affichée sur le HMD (10) jusqu'à obtenir un chevauchement de l'image de pointage (ARR) avec l'objet de pointage (WPR) dans la position de pointage (PWR) ; et
- convertir ladite translation de l'image de pointage (ARR) dans un système de référence bidimensionnel en une translation et une rotation de la position de pointage virtuelle (PVR) dans le système de référence tridimensionnel.

8. - Procédé (900) selon l'une quelconque des revendications précédentes, comprenant en outre l'étape :
- acquérir des informations de déplacement de véhicule (5), et
l'étape d'affichage, sur le HMD (10), d'une image associée à l'objet d'intérêt comprenant :
- modifier l'image en fonction du déplacement du véhicule (5) et du temps.

9. - Système (1) d'aide à la conduite d'un véhicule (5) comprenant :
- un HMD (10) ;
- au moins un élément de référence (40) disposé à l'intérieur du véhicule (5) ;
- un module de positionnement (20) monté sur le véhicule, configuré pour détecter une position de véhicule,
- une zone de mémoire (31) dans laquelle au moins une position d'intérêt associée à un objet d'intérêt est stockée, et
- une unité de traitement (30) reliée de manière fonctionnelle au module de positionnement (20) et au HMD (10), et configurée pour mettre en oeuvre le procédé (900) selon l'une quelconque des revendications précédentes.

10. - Système (1) selon la revendication 9, dans lequel l'unité de traitement (30) est reliée de manière fonctionnelle à au moins un parmi :
- un BUS (55) pour une communication avec le véhicule (5), et
- une unité de mesure inertielle (6),
pour acquérir des informations de véhicule (5).
